# EUROPÄISCHE PATENTSCHRIFT

(11) **EP 2 508 767 B1**
(45) Veröffentlichungstag und Bekanntmachung des Hinweises auf die Patenterteilung: **02.10.2013**
(21) Anmeldenummer: 11161355.0
(22) Anmeldetag: 06.04.2011
(51) Int. Cl.: F16C 19/49, F16C 19/54, F16C 43/04

(54) **Kombiniertes Radialdrucklager**
Combined radial thrust bearing
Palier de butée radial combiné

(43) Veröffentlichungstag der Anmeldung: 10.10.2012
(73) Patentinhaber: Groz-Beckert KG, 72458 Albstadt (DE)
(72) Erfinder: Bach, Elmar, 63571 Gelnhausen (DE)
(74) Vertreter: Rüger, Barthelt & Abel

(56) Entgegenhaltungen:
- DE-C- 840 940
- FR-A- 551 761
- US-A- 3 920 292
- US-A- 4 109 977

## Beschreibung

Die Erfindung betrifft ein Wälzlager zur Aufnahme von Radialkräften und zur Aufnahme von Axialkräften.

Kombinierte Axialdrucklager sind zum Beispiel aus der EP 1 627 157 B1 bekannt. Solche Lager weisen einen buchsenartigen Innenring mit einem an einem Ende desselben vorgesehenen Radialflansch auf. Der Außenumfang des buchsenförmigen Innenrings dient als Lauffläche für schlanke, walzenartige Wälzkörper. Die Stirnfläche des Radialflansches bildet eine ebene ringförmige Lauffläche für Axiallagerkörper. Der Außenring erstreckt sich um die Radialwälzkörper und die Axialwälzkörper und schließt diese ein. Er weist nach innen gebogene Bereiche auf.

Die Herstellung des stirnseitigen nach innen umgebogenen Endes des Außenrings ist zumindest anspruchsvoll. Die Lauffläche der Axialwälzkörper ist einer Bearbeitung schwer zugänglich.

Hierzu wird nach Abhilfe gesucht.

Die DE 196 25 930 A1 veranschaulicht eine Lagerung, die aus einem Axiallager und einem Radiallager zusammengesetzt ist. Die Lager umfassen relativ viele Einzelteile, die bei der Herstellung der Lagerung einzeln gehandhabt werden müssen.

Die DE 840 940 C beschreibt ein ähnliches Radial- und Axiallager, das zu einer Baueinheit zusammengefasst ist.

Aus US 3 920 292 ist ein Axial- und Radiallager bekannt, bei dem der Innenring des Radiallagers mit einem ersten Drückring des Axiallagers einstückig ausgeführt ist, so dass eine Verbindung zwischen Axiallager und Radiallager hergestellt ist. Ein ähnliches Axial- Und Radiallager beschreibt auch US 4 109 977.

Hiervon ausgehend ist es Aufgabe der Erfindung, eine verbesserte Lagereinrichtung zu schaffen.

Diese Erfindung wird mit der Lageranordnung nach Anspruch 1 gelöst:

Die erfindungsgemäße Lageranordnung umfasst ein Axiallager und ein Radiallager. Diese sind untereinander durch eine spielbehaftete Formschlussverbindung so verbunden, dass sich einerseits eine leichte Herstellbarkeit und andererseits danach eine leichte einheitliche Handhabbarkeit der Lageranordnung ergeben.

In einer ersten Serie von Ausführungsformen besteht eine axiale Verbindung zwischen dem Außenring des Radiallagers und dem ersten, das heißt stirnseitigen, von dem Radiallager fernliegenden Druckring des Axiallagers. Diese Verbindung ist erfindungsgemäß eine Formschlussverbindung in Gestalt einer Rastverbindung, die allerdings so viel Spiel hat, das in Einbauposition ein Luftspalt zwischen den beteiligten Rastgliedern vorhanden ist. Dadurch kann sich die Rastverbindung reibungs- und berührungslos drehen. Zur Montage stellt sie allerdings den Zusammenhalt zwischen dem Axiallager und dem Radiallager sicher, so dass dieses einheitlich gehandhabt werden kann.

In einer anderen Serie von Ausführungsformen besteht die Verbindung zwischen dem Innenring des Radiallagers und dem ersten Axial-Druckring des Axiallagers. Diese Verbindung ist als Rastverbindung ausgebildet. Gegenüber bekannten Lageranordnungen ergibt sich hier jedoch der Vorteil einer wesentlich besseren Herstellbarkeit. Der hülsenartige Außenring des Radiallagers weist einen nach innen gerichteten Flansch auf, an dem die Laufbahn für die AxialLagerkörper an der Außenfläche ausgebildet ist. Arbeiten zur Oberflächenbearbeitung, beispielsweise Schleifen, an schwer zugänglichen Lagerstellen sind somit bei der Herstellung des Lagers nicht auszuführen.

Die Rastverbindung zur axialen Sicherung des Axiallagers am Radiallager kann zum Beispiel durch eine Ringrippe und eine dazu passende Ringnut ausgebildet werden. Alternativ können zwei einander gegenüberliegende Ringnuten an den beteiligten zu verbindenden Teilen ausgebildet sein, wobei in dem Zwischenraum zwischen beiden Nuten zum Beispiel ein Schnappring vorgesehen ist. Ein solcher Ring kann beispielsweise ein C-Clips-Ring sein, der aus federndem Material, zum Beispiel Federstahl, ausgebildet ist. Anstelle der Ringrippe können auch einzelne nasenartige Vorsprünge vorgesehen sein, die entweder durch eigene federnde Nachgiebigkeit oder Nachgiebigkeit des mit der Ringnut versehenen Rastpartners rastend ineinander greifen können. Alternativ kann auf die Federwirkung verzichtet werden, wenn die Ringnut mit einer entsprechenden Anzahl von axialen Eingängen versehen ist, durch die die Rastnasen hindurch treten können. In diesem Fall ist die Axialverbindung nur gegeben, wenn der erste Axialdruckring und der beteiligte Ring des Radiallagers etwas gegeneinander verdreht sind. Die Verbindung ist dann nach Art eines Bajonettverschlusses gegeben, wobei auch hier der vorhandene Luftspalt, das heißt das vorhandene Spiel im eingebauten Zustand einen berührungslosen Lauf sichert.

In Fällen, bei denen die beteiligten Ringe aus Kunststoff ausgebildet sind, lässt sich die geforderte Nachgiebigkeit im Bereich der Rastverbindung leicht durch die gegebenen Materialeigenschaften sicherstellen. Alternativ können die rastenden Bereiche, also Nuten, Rippen, Vorsprünge und dergleichen aus einem nachgiebigen Material, wie beispielsweise Elastomer, Kunststoff oder dergleichen ausgebildet sein.

Alle Ausführungsformen haben gemeinsam, dass der die Wälzkörper des Axialdrucklagers aufnehmende Luftspalt zwischen den Axial-Druckringen radial nach außen hin offen ist. Alle Ausführungsformen haben außerdem gemeinsam, dass der die Wälzkörper des Radiallagers aufnehmende Luftspalt zwischen dem Innenring und dem Außenring axial zu einem Stirnseitigen Ende hin offen ist.

Weitere Abwandlungen ergeben sich aus der Zeichnung der Beschreibung oder Ansprüchen. Es zeigen:
Figur 1 eine erfindungsgemäße Lageranordnung mit gelagerter Welle in eingebautem Zustand in Vertikalschnittdarstellung,
Figur 2 eine abgewandelte Ausführungsform der Lageranordnung im Vertikalschnitt,
Figur 3 bis 5 und 7 bis 9 weitere Ausführungsformen der erfindungsgemäßen Lageranordnung jeweils im Vertikalschnitt.
Figur 6 zeigt eine Lageranordnung ohne spielbehaftete Rastverbindung und entspricht somit nicht vollständing der Erfindung nach Anspruch 1.

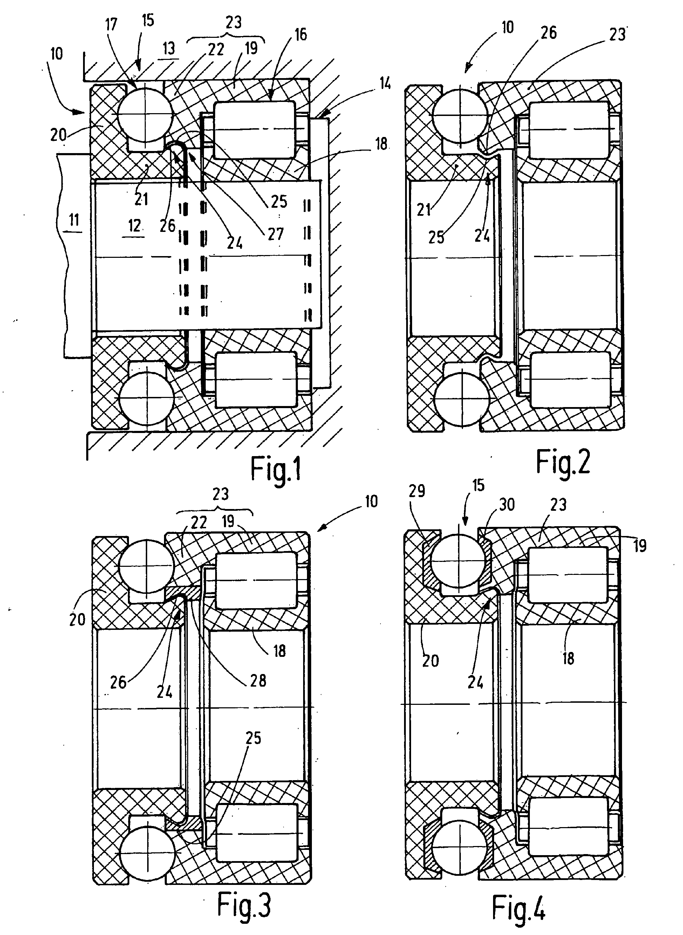

In Figur 1 ist die erfindungsgemäße Lageranordnung 10 veranschaulicht. Sie dient der Lagerung einer Welle 11, die einen Zapfen 12 aufweist, in oder an einem Maschinenteil 13. Die Lageranordnung 10 besteht dazu aus einem Radiallager 14 und einem Axiallager 15. Beide sind als Wälzlager ausgebildet. Das Radiallager 14 kann als Wälzkörper 16 Kugeln, Nadel, Tonnen oder, wie dargestellt, Rollen oder sonstige Wälzkörper in ein- oder mehrreihiger Anordnung aufweisen. Ebenso kann das Axiallager 15 jede geeignete Art von Wälzkörpern 17, so zum Beispiel Kugeln, Tonnen, Rollen oder dergleichen aufweisen sowie ein- oder mehrreihig aufgebaut sein.

Zu dem Radiallager 14 gehören ein Innenring 18, an dem an einer nach außen weisenden Fläche eine Laufbahn für die Wälzkörper 16 ausgebildet ist, sowie ein Außenring 19. Der Außenring 19 weist eine nach innen gerichtete Lauffläche für die Wälzkörper 16 auf. Das Außenmaß des Außenrings 19 ist so bemessen, dass dieser fest in einer entsprechenden Bohrung oder Tasche des Maschinenteils 13 sitzt. Der Innendurchmesser des Innenrings 18 ist so bemessen, dass dieser fest auf dem Zapfen 12 der Welle 11 sitzt. Damit ist der Innenring 18 drehfest mit der Welle 11 verbunden, während der Außenring 19 von dem Maschinenteil 13 drehfest gehalten ist. Sowohl der Innenring 18 als auch der Außenring 19 können Borde (wie dargestellt) aufweisen oder ohne Borde ausgeführt sein.

Der Innenring 18 und der Außenring 19 können aus Metall oder auch aus einem anderen Material ausgebildet sein, beispielsweise aus Kunststoff. Bei geringeren Belastungen können die Laufbahnen für die Wälzkörper 16 an dem Innenring 18 und dem Außenring 19 direkt aus Kunststoff ausgebildet sein. Es ist jedoch auch möglich, Metallinlays vorzusehen, an denen die Laufbahnen ausgebildet sind.

Das Axiallager 15 umfasst einen ersten Axial-Druckring 20, der einen hülsenförmigen Fortsatz 21 und einen sich von diesem radial weg erstreckenden Flansch aufweist. An diesem Flansch ist eine Laufbahn für die Wälzkörper 17 ausgebildet, wobei diese Laufbahn zu den Wälzkörpern 17 und auch zu den Wälzkörpern 16 hin weist. Mit anderen Worten, aus Sicht der Wälzkörper 16 ist der Radialflansch des Axial-Druckrings 20 jenseits der Wälzkörper 17 ausgebildet.

Zu dem Axiallager 15 gehört ein zweiter Axial-Druckring 22, der eine Laufbahn für die Wälzkörper 17 aufweist. Der Axial-Druckring 22 liegt dem Radialflansch des ersten Axial-Druckrings 20 gegenüber und grenzt unmittelbar an den Außenring 19. Im vorliegenden Ausführungsbeispiel sind der Außenring 19 und er Axial-Druckring 22 einteilig aus einem einheitlichen Material nahtlos ineinander übergehend ausbildet. Es ist jedoch auch möglich, den Axial-Druckring 22 und den Außenring 19 als separate Teile bereitzustellen und in einem Fügeprozess miteinander zu verbinden, beispielsweise durch Kleben, Schweißen, Verschrauben oder durch sonstige Fügetechnik.

Das den Außenring 19 und den zweiten Axial-Druckring 22 bildende Teil 23 weist zwei Laufflächen für die Wälzkörper 16, 17 auf. Während eine Lauffläche radial nach innen weist, weist die andere Lauffläche axial von dem Teil 23 weg.

Der Axial-Druckring 20 ist wie der Innenring 18 ein drehendes Bauteil. Er weist jedoch einen Innendurchmesser auf, der vorzugsweise etwas größer ist als der Durchmesser des Zapfens 12. Dadurch wird eine statische Überbestimmung an den Wälzkörpern 17 vermieden. Der Außendurchmesser des Radialflanschs des ersten Druckrings 20 ist vorzugsweise etwas kleiner als der Außendurchmesser des Außenrings 19. Deshalb verbleibt ein Spalt zwischen dem Lagersitz der Lageranordnung 10 und der Außenumfangsfläche des Axial-Druckrings 20, so dass dieser sich reibungsfrei in dem Maschinenteil 13 drehen kann.

Zwischen dem ersten Axial-Druckring 20 und dem Außenring 19, dem zweiten Axial-Druckring 22 oder dem Teil 23 und dem ersten Axial-Druckring 20 ist eine bei der Montage der Lagereinrichtung 10 wirksame Verbindung 24 gegeben. Diese Verbindung wird im vorliegenden Ausführungsbeispiel durch eine an dem zweiten Axial-Druckring 22 ausgebildete sich radial nach innen öffnende Ringnut 25 und eine an dem Fortsatz 21 ausgebildete in diese Ringnut 25 greifende zum Beispiel ringförmige Rippe 26 gebildet. Die Ringnut 25 und die Rippe 26 bilden eine Rastverbindung. Zwischen ihnen kann ein Luftspalt 27 vorgesehen sein, der so groß ist, dass die Rippe 26 bei korrektem Einbau der Lageranordnung 10 in Betrieb die Nut 25 nicht berührt.

Um eine ausreichende radiale Nachgiebigkeit der Rastverbindung für den ersten Zusammenbau der Lageranordnung 10 zu erreichen, kann der Fortsatz 21 mit einer Anzahl sich axial erstreckender, in Figur 1 nicht weiter veranschaulichter Schlitze versehen sein, so dass die so freigestellten Zonen, die sich außen zu der Rippe 26 ergänzen, etwas radial nach innen federn können. Diese Lösung ist insbesondere sinnvoll, wenn das Teil 23 und der Druckring 20 aus Metall bestehen. Bestehen diese Teile und gegebenenfalls auch der Innenring 18 jedoch aus Kunststoff, kann auf derartige Schlitze auch verzichtet werden. Die Rastwirkung zwischen der Rippe 26 und der Nut 25 ergibt sich dann durch die inhärente Nachgiebigkeit des Kunststoffes.

An der vorbestellten Lageranordnung 10 sind viele Abwandlungen möglich. Wie Figur 2 zeigt, können die Nut 25 und die Rippe 26 ihre Plätze tauschen. Die Rippe 26 kann dem Teil 23 zugeordnet werden, während die Nut 25 dem Fortsatz 21 zugeordnet sein kann. Dies gilt unabhängig von der sonstigen Ausbildung der Lageranordnung 10.

Zur Verbesserung der Rastwirkung kann die Rippe 26 und/oder die Nut 25 in oder an einem von den übrigen Teilen abweichenden Material ausgebildet sein. In der Ausführungsform nach Figur 3 bestehen die axialen Druckringe 20, 22 sowie der Innenring 18 und der Außenring 19 aus einem wenig nachgiebigen Kunststoff oder aus Metall. An dem Teil 23 ist ein zum Beispiel aus Gummi oder einem sonstigen Elastomer oder Kunststoff bestehender ringförmiger Abschnitt 28 ausgebildet, der mit der Nut 25 versehen ist. In diese greift wiederum die ringförmige Rippe 26. Die Nut 25 und die Rippe 26 können ihren Platz auch tauschen, so dass das Konzept nach Figur 2 auch bei der Ausführungsform nach Figur 3 anwendbar ist. Alternativ kann die Rippe 26 aus elastomerem Material ausgebildet werden. Es können auch beide Elemente, das heißt sowohl die Nut 25, als auch die Rippe 26, an Elastomermaterial ausgebildet sein.

Figur 4 veranschaulicht eine Lageranordnung 10, deren drei Hauptteile, nämlich der erste Axial-Druckring 20 der Innenring 18 und das Teil 23, aus Kunststoff ausgebildet sind. Für das Axiallager 15 sind die Laufbahnen an Metallinlays 29, 30 ausgebildet, die in die ansonsten aus Kunststoff ausgebildeten Teile eingelagert sind. Alternativ oder ergänzend können die Laufbahnen an dem Innenring 18 und dem Außenring 19 ebenfalls an Metallinlays ausgebildet sein, was nicht weiter dargestellt ist. Ansonsten gelten alle Varianten der vorigen und nachfolgenden Beschreibung auch für diese Ausführungsform entsprechend.

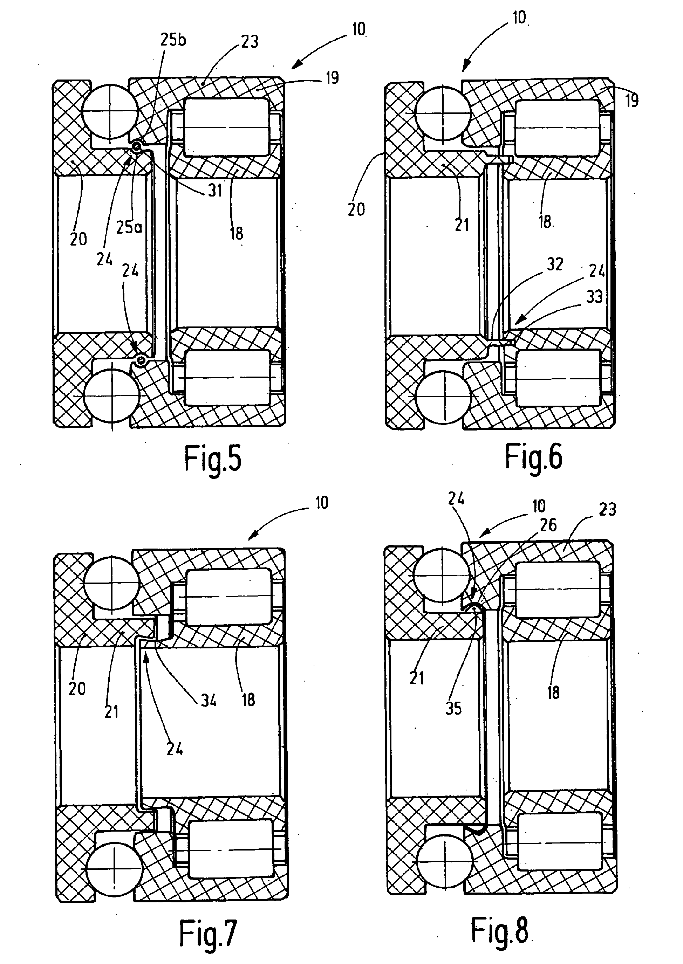

Figur 5 veranschaulicht eine weitere Ausführungsform der erfindungsgemäßen Lageranordnung 10. Hinsichtlich der Ausbildung des Axial-Druckrings 20, des Teiles 23 und des Innenrings 18 können alle zuvor und nachfolgend noch beschriebenen Varianten zur Anwendung kommen. Figur 5 veranschaulicht jedoch eine besondere Art der Verbindung 24. Diese wird hier zwischen dem Teil 23 und dem Axial-Druckring 20 ausgebildet, in dem beide Teile jeweils mit Ringnuten 25a, 25b versehen sind. In dem zwischen den beiden Ringnuten 25a, 25b gebildeten ringförmigem Zwischenraum kann ein C-Federring 31 angeordnet sein, der zum Beispiel radial nach innen oder außen vorgespannt ist und ein Verrasten des Axial-Druckrings 20 mit dem Teil 23 gestattet. Der Federring 31 ist beispielsweise ein geschlitzter Stahlring mit rundem Drahtquerschnitt.

Eine weitere abgewandelte Ausführungsform veranschaulicht Figur 6. Hinsichtlich der grundsätzlichen Beschreibung gelten alle vor- und nachstehend beschriebenen Details und Alternativen entsprechend mit folgender Ausnahme:
Bei der Ausführungsform nach Figur 6 ist eine axiale Verbindung zwischen dem ersten Axial-Druckring 20 und dem Innenring 18 gegeben. Diese Verbindung wird bei dem Zusammenbau der Lageranordnung 10 hergestellt und danach nicht wieder aufgelöst. Während die vorigen axialen Verbindungen jeweils als spielbehaftete Verbindung beschrieben worden sind, kann es sich hier um eine spielfreie Verbindung handeln. Beispielsweise kann an dem hülsenförmigen Fortsatz 21 eine Serie von Pins 32 oder auch ein dünnwandigerer axialer rohrförmiger Fortsatz vorgesehen sein. Die Pins 32 greifen in entsprechende Stirnbohrungen 33 des Innenrings 18 und sind dort beispielsweise in Presssitz gehalten. Ist anstelle der Pins 32 ein dünnwandiger rohrförmiger Fortsatz mit durchgehender oder geschlitzter Wand vorgesehen, kann dieser in eine entsprechende Ringnut greifen und dort wiederum im Presssitz gehalten sein. Anstelle des Presssitzes können auch andere Verbindungen, wie Rastverbindung, Klebeverbindung, Schweißverbindung oder dergleichen vorgesehen sein.

Wie Figur 7 zeigt ist es jedoch auch möglich, für die Verbindung zwischen dem Axial-Druckring 20 und dem Innenring 18 eine spielbehaftete Rastverbindung vorzusehen. Dazu können an dem Innenring 18 einzelne Zungen oder auch ein rohrförmiger Axialfortsatz 34 vorgesehen sein, der in eine entsprechende sich radial nach innen öffnende Ringnut des Hülsenfortsatzes 21 greift. Es kann hier wieder ein Luftspalt vorgesehen sein, um eine statische Überbestimmung der Radialposition bzw. der koaxialen Ausrichtung des Axial-Druckrings 20 zu vermeiden.

Figur 8 veranschaulicht wiederum eine Ausführungsform der Lageranordnung 10 an einem auf Basis der Ausführungsform nach Figur 1 modifizierten Beispiel. An dem hülsenförmigen Fortsatz 21 ist anstelle einer vollständigen Rippe 26 lediglich eine Serie einzelner Vorsprünge, beispielsweise Nasen oder Noppen 35 vorgesehen. Es mag genügen, zwei oder mehrere solcher Noppen 35 entlang des Umfangs des Fortsatzes 21 wie einen Kranz anzuordnen, so dass diese Noppen 35 in die Ringnut 26 greifen und die oben mehrfach beschriebene Rastwirkung erbringen. Wiederum ist zwischen den Noppen 35 und der Ringnut 36 soviel Spiel vorhanden, dass in eingebautem Zustand der Lageranordnung 10 keine Berührung zwischen den Fortsätzen 35 und dem Teil 23 vorhanden ist.

Die vorgenannten Ausführungsbeispiele lassen sich in ihren Details nahezu beliebig miteinander kombinieren. Beispielsweise können der Innenring 18, der Außenring 19, der erste Axial-Druckring 20 und der zweite Axial-Druckring 22 jeweils für sich aus einem Metall zum Beispiel Stahl oder aus einem Kunststoff ausgebildet sein. Bedarfsweise können Sie ungeachtet der Ausführungsform der axialen Verbindung 24 mit Metallinlays versehen sein, unabhängig von der Ausbildung der Wälzkörper der Laufbahnen oder der Materialwahl der beteiligten Teile kann an der Verbindung 24 jede der genannten Maßnahmen getroffen werden, um die Rastennachgiebigkeit zu erhöhen. Weiter wird darauf hingewiesen, dass die Wälzkörper 16, 17 frei laufen oder mit einem Käfig versehen sein können.

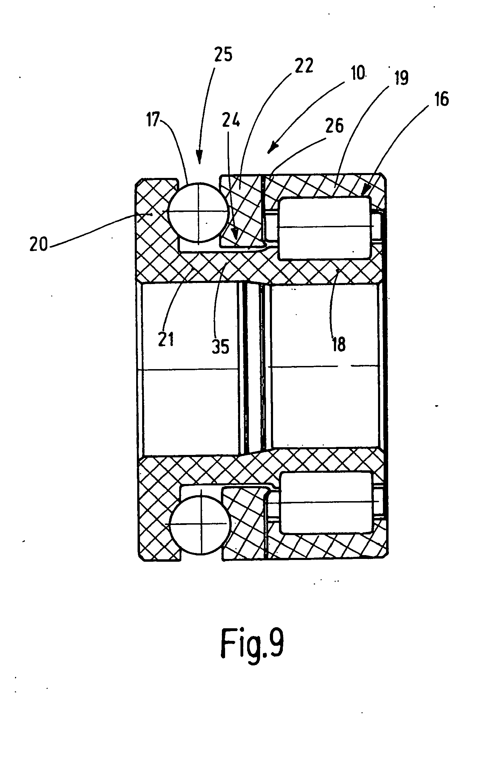

Figur 9 veranschaulicht eine weiter abgewandelte Lageranordnung 10. Wie ersichtlich sind bei dieser der Innenring 18 und der Axial-Druckring 20 z.B. über den Fortsatz 21 z.B. fest miteinander verbunden Sie können ein nahtloses aus einheitlichem Material bestehendes Teil aus Metall oder Kunststoff mit oder ohne Metallinlays an den Laufbahnen bilden. Der Axial-Druckring 22 und der Außenring 19 können als ein Teil oder, wie dargestellt, als separate, an einer stirnseitigen Anlagefläche aneinanderstoßende Teile ausgebildet sein.

Die erfindungsgemäße Lageranordnung 10 umfasst ein Radiallager 14 und ein Axiallager 15, die untereinander vorzugsweise durch eine spielbehaftete Rastverbindung verbunden sind. Diese Maßnahme verbindet einfache Herstellbarkeit mit leichter Montierbarkeit des Lagers.

### Bezugszeichenliste:

- 10: Lageranordnung
- 11: Welle
- 12: Zapfen
- 13: Maschinenteil
- 14: Radiallager
- 15: Axiallager
- 16: Wälzkörper des Radiallagers
- 17: Wälzköper des Axiallagers
- 18: Innenring
- 19: Außenring
- 20: Erster Axial-Druckring
- 21: Hülsenförmiger Fortsatz
- 22: Zweiter Axial-Druckring
- 23: Teil
- 24: Verbindung
- 25, 25a, 25b: Ringnut
- 26: Rippe
- 27: Luftspalt
- 28: Elastomermaterial
- 29: Erstes Metallinlay
- 30: Zweites Metallinlay
- 31: Federring
- 32: Pins
- 33: Stirnbohrungen
- 34: Axialfortsatz
- 35: Noppen

## Patentansprüche

1. Lageranordnung (10)
mit einem Radiallager (14), zu dem ein Innenring (18) und ein Außenring (19) gehören, zwischen denen Wälzkörper (16) angeordnet sind,
mit einem Axiallager (15), zu dem ein erster Axiallager-Druckring (20) und ein zweiter, dem Außenring (19) unmittelbar benachbarter Axiallager-Druckring (22) gehören, zwischen denen Wälzkörper (17) angeordnet sind,
wobei zwischen dem Innenring (18) und/oder dem Außenring (19) einerseits und dem ersten Druckring (20) andererseits eine axiale Verbindung (24) durch eine spielbehaftete Formschlussverbindung ausgebildet ist, die als in Einbauposition berührungslose Rastverbindung ausgebildet ist.

2. Lageranordnung nach Anspruch 1, **dadurch gekennzeichnet, dass** zu der Verbindung (24) eine Ringnut (25), die einem der Ringe (20, 19, 18) zugeordnet ist, und mindestens ein Vorsprung (26, 35) gehören, der an einem anderen der Ringe (18, 19, 20) ausgebildet ist.

3. Lageranordnung nach Anspruch 1, **dadurch gekennzeichnet, dass** zwischen dem Vorsprung (26, 35) und der Nut (25) ein Luftspalt (27) ausgebildet ist.

4. Lageranordnung nach Anspruch 2, **dadurch gekennzeichnet, dass** der Vorsprung eine Ringrippe (26) ist.

5. Lageranordnung nach Anspruch 1, **dadurch gekennzeichnet, dass** der Vorsprung (26, 35) und/oder die Nut (25) radial federnd nachgiebig ausgebildet sind.

6. Lageranordnung nach Anspruch 1, **dadurch gekennzeichnet, dass** zumindest Teile des ersten Druckrings (20) und/oder des zweiten Druckrings (22) und/oder des Innenrings (18) und/oder des Außenrings (19) aus Kunststoff ausgebildet sind.

7. Lageranordnung nach Anspruch 1, **dadurch gekennzeichnet, dass** zumindest einer von dem ersten oder zweiten Druckring (20, 22) sowie dem Innenring (18) und dem Außenring (19) aus Kunststoff ausgebildet ist.

8. Lageranordnung nach Anspruch 1, **dadurch gekennzeichnet, dass** der zweite Druckring (22) und der Außenring (19) miteinander verbunden sind.

9. Lageranordnung nach Anspruch 1, **dadurch gekennzeichnet, dass** der zweite Druckring (22) und der Außenring (19) einteilig als ein nahtloses Teil (23) ausgebildet ist.

## Claims

1. Bearing arrangement (10)
with a radial bearing (14), which includes an inner ring (18) and an outer ring (19), between which roll bodies (16) are arranged,
with an axial bearing (15), which includes a first axial bearing pressure ring (20) and a second axial bearing pressure ring (22) directly adjacent to the outer ring (19), between which roll bodies (17) are arranged,
wherein an axial connection (24) formed by a positive-locking connection, which is subject to play and is configured as a non-contact locking connection in installed position, is arranged between the inner ring (18) and/or the outer ring (19), on one side, and the first pressure ring (20), on the other.

2. Bearing arrangement according to claim 1, **characterised in that** the connection (24) includes an annular groove (25), which is associated with one of the rings (20, 19, 18), and at least one projection (26, 35), which is configured on another of the rings (18, 19, 20).

3. Bearing arrangement according to claim 1, **characterised in that** an air gap (27) is configured between the projection (26, 35) and the groove (25).

4. Bearing arrangement according to claim 2, **characterised in that** the projection is an annular rib (26).

5. Bearing arrangement according to claim 1, **characterised in that** the projection (26, 35) and/or the groove (25) are flexible in a radially resilient manner.

6. Bearing arrangement according to claim 1, **characterised in that** at least parts of the first pressure ring (20) and/or the second pressure ring (22) and/or the inner ring (18) and/or the outer ring (19) are formed from plastic.

7. Bearing arrangement according to claim 1, **characterised in that** at least one of the first or second pressure rings (20, 22) and also the inner ring (18) and the outer ring (19) are formed from plastic.

8. Bearing arrangement according to claim 1, **characterised in that** the second pressure ring (22) and the outer ring (19) are connected to one another.

9. Bearing arrangement according to claim 1, **characterised in that** the second pressure ring (22) and the outer ring (19) are configured in one piece as a seamless part (23).

## Revendications

1. Système de palier (10),
comprenant un palier radial (14) qui comporte une bague intérieure (18) et une bague extérieure (19), entre lesquelles sont disposés des corps de roulement (16),
comprenant un palier axial (15) qui comporte une première bague de butée de palier axial (20) et une deuxième bague de butée de palier axial (22), directement adjacente à la bague extérieure (19), entre lesquelles sont disposés des corps de roulement (17),
un assemblage axial (24) étant réalisé entre la bague intérieure (18) et/ou la bague extérieure (19), d'une part, et la première bague de butée (20), d'autre part, par l'intermédiaire d'un assemblage par complémentarité de formes présentant du jeu, qui est réalisé sous forme d'assemblage à encliquetage qui est sans contact dans la position de montage.

2. Système de palier selon la revendication 1, **caractérisé en ce que** l'assemblage (24) comporte une gorge annulaire (25), qui est associée à l'une des bagues (20, 19, 18), et au moins une saillie (26, 35) qui est réalisée sur une autre des bagues (18, 19, 20).

3. Système de palier selon la revendication 1, **caractérisé en ce qu'**un interstice (27) est formé entre la saillie (26, 35) et la gorge (25).

4. Système de palier selon la revendication 2, **caractérisé en ce que** la saillie est une nervure annulaire (26).

5. Système de palier selon la revendication 1, **caractérisé en ce que** la saillie (26, 35) et/ou la gorge (25) sont réalisées de manière à être souples élastiques dans le sens radial.

6. Système de palier selon la revendication 1, **caractérisé en ce qu'**au moins des parties de la première bague de butée (20) et/ou de la deuxième bague de butée (22) et/ou de la bague intérieure (18) et/ou de la bague extérieure (19) sont réalisées en matière plastique.

7. Système de palier selon la revendication 1, **caractérisé en ce qu'**au moins une bague parmi les première ou deuxième bagues de butée (20, 22) ainsi que parmi la bague intérieure (18) et la bague extérieure (19) est réalisée en matière plastique.

8. Système de palier selon la revendication 1, **caractérisé en ce que** la deuxième bague de butée (22) et la bague extérieure (19) sont reliées l'une à l'autre.

9. Système de palier selon la revendication 1, **caractérisé en ce que** la deuxième bague de butée (22) et la bague extérieure (19) sont réalisées d'un seul tenant, en tant que pièce sans soudure (23).
